# EUROPEAN PATENT SPECIFICATION

(11) **EP 4 397 581 B1**
(45) Date of publication and mention of the grant of the patent: **09.07.2025**
(21) Application number: 23213604.4
(22) Date of filing: 01.12.2023
(51) Int. Cl.: B62J 9/12

(54) **STORAGE BOX FOR STRADDLED VEHICLE**
AUFBEWAHRUNGSBOX FÜR GRÄTSCHSITZFAHRZEUGE
BOÎTE DE STOCKAGE POUR VÉHICULE À ENFOURCHER

(30) Priority: 27.12.2022 JP 2022210591
(43) Date of publication of application: 10.07.2024
(73) Proprietor: Yamaha Hatsudoki Kabushiki Kaisha, Iwata-shi, Shizuoka 438-8501 (JP); Nifco Inc., Yokosuka-shi, Kanagawa 239-8560 (JP)
(72) Inventor: SHINOHARA, Shoya, 4388501 Iwata-shi (JP); NAOI, Hajime, 2398560 Yokosuka-shi (JP)
(74) Representative: Studio Torta S.p.A.

(56) References cited:
- EP-A2- 3 222 506
- JP-A- 2014 043 208
- US-A1- 2010 012 696

## Description

### Technical Field

The present invention relates to a storage box for a straddled vehicle.

### Prior art

There has been conventionally known a type of straddled vehicle including a storage box installed inside a tank shroud (see Japan Laid-open Patent Application Publication No. 2015-83395). The storage box is capable of storing an electronic device such as a portable information terminal.

When stored in the storage box of the straddled vehicle, the portable information terminal is likely to be affected by ground conditions and acceleration of the vehicle due to a lightweight feature of the straddled vehicle. Because of this, it is preferable to retain the portable information terminal inside the storage box. However, when it is assumed to store the portable information terminal in the storage box and then attach a band to the storage box as a structure for retaining the portable information terminal, attaching the band to the portable information terminal is bothersome.
JP-A-2014043208 discloses a storage box according to the preamble of claim 1.

### Description of the invention

It is an object of the present invention to provide a storage box for a straddled vehicle, whereby a portable information terminal stored therein can be easily retained.

A storage box for a straddled vehicle according to an aspect of the present invention stores a portable information terminal. The storage box includes a storage portion, a lid portion, at least one elastic member, and a shaft portion. The storage portion includes an opening for putting-in and taking-out of the portable information terminal, an inner sidewall, and at least one restriction portion opposed to the inner sidewall. The storage portion stores the portable information terminal such that the portable information terminal stands between the inner sidewall and the at least one restriction portion. The lid portion is capable of transitioning to a closed state and an opened state. The lid portion closes the opening in the closed state and opens the opening in the opened state. The lid portion is opposed to the inner sidewall in the closed state. The at least one elastic member is disposed on at least either the lid portion or the inner sidewall and presses the portable information terminal in a thickness direction of the portable information terminal between the lid portion or the inner sidewall in the closed state to hold the portable information terminal in the storage portion. The shaft portion pivotably supports the lid portion. The inner sidewall extends in approximately a vehicle up-and-down direction or extends to gradually approach the at least one restriction portion from below to above. The inner sidewall and the at least one restriction portion produce a space therebetween so as to allow the portable information terminal to tilt toward the at least one restriction portion in the opened state of the lid portion. The at least one restriction portion is apart from the portable information terminal in the closed state and contacts with the portable information terminal on a front or rear surface side of the portable information terminal so as to restrict movement of the portable information terminal when the lid portion transitions from the closed state to the opened state.

In the storage box for a straddled vehicle according to the present aspect, when the lid portion of the storage box is closed, the portable information terminal, stored in the storage portion of the storage box, is pressed by the at least one elastic member in the thickness direction thereof so as to be retained in the storage portion. Accordingly, the portable information terminal can be retained by an easy operation, i.e., only by pivoting the lid portion of the storage box; hence, when a rider is riding on the vehicle, for instance, the portable information terminal stored in the storage box can be easily retained, while the vehicle can be kept in balance.

The portable information terminal is stored to stand between the inner sidewall and the at least one restriction portion; besides, the inner sidewall and the at least one restriction portion produce the space therebetween so as to allow the portable information terminal to tilt toward the at least one restriction portion when the lid portion is opened. Because of this, when the rider is riding on the vehicle, for instance, it is made easy for the rider to put/take the portable information terminal in/out of the storage portion.

The inner sidewall of the storage portion extends in approximately the vehicle up-and-down direction or extends to gradually approach the at least one restriction portion from below to above. Because of this, when the inner sidewall of the storage portion extends in approximately the vehicle up-and-down direction, for instance, it is made possible, in transition of the lid portion from the closed state to the opened state, to move the portable information terminal to the at least one restriction portion due to a recoil caused in releasing a pressing force applied by the at least one elastic member pressing the portable information terminal. Because of this, when the rider riding on the vehicle opens the lid portion, for instance, it is made easy for the rider to take the portable information terminal out of the storage portion.

The at least one elastic member may be disposed at least in part at an identical height to a center of the inner sidewall in the vehicle up-and-down direction in the closed state. In this case, the portable information terminal can be stably retained in the storage portion in the closed state. Specifically, portable information terminals, even when different in type from each other, do not vary in dimension so much in the width direction; hence, the portable information terminal can be stably retained in the storage portion in the closed state by, for instance, setting the up-and-down directional center of the inner sidewall to be matched with approximately the width directional center of a general portable information terminal.

The at least one elastic member may extend in a lengthwise direction of the portable information terminal when the portable information terminal is stored in the storage portion in the closed state. In this case, the portable information terminal can be stably retained in the storage portion in the closed state.

The at least one elastic member may be disposed on the lid portion. In this case, in transition of the lid portion from the opened state to the closed state, the portable information terminal can be supported by the at least one elastic member until contacting with the at least one restriction portion.

The at least one restriction portion may be disposed below the at least one elastic member in the closed state. In this case, when the portable information terminal is taken out of the storage portion, the at least one restriction portion is unlikely to hinder the taking-out action. Besides, the at least one elastic member can be disposed near the at least one restriction portion; hence, when the lid portion is opened while the portable information terminal is stored in the storage portion, the portable information terminal can be kept supported by the at least one elastic member until contacting with the at least one restriction portion.

The storage portion may further include a bottom surface portion extending in a direction intersecting with the vehicle up-and-down direction. The at least one restriction portion may extend upward from the bottom surface portion. The at least one restriction portion may have a height larger than or equal to a half of a dimension from the bottom surface portion to the at least one elastic member in the closed state. In this case, movement of the portable information terminal can be stably restricted in the opened state.

The at least one restriction portion may extend from the bottom surface portion to a vicinity of the at least one elastic member. In this case, movement of the portable information terminal can be further stably restricted in the opened state.

The at least one restriction portion may have a dimension larger than or equal to a quarter of, and less than or equal to three quarters of, a dimension of the inner sidewall in the vehicle up-and-down direction. In this case, movement of the portable information terminal can be stably restricted; simultaneously, it is made easy to put/take the portable information terminal in/out of the storage portion.

The at least one elastic member may include a first elastic member disposed on the lid portion and a second elastic member disposed on the inner sidewall of the storage portion. In this case, when the lid portion is opened while the portable information terminal is stored in the storage portion, the portable information terminal can be supported by the first elastic member until contacting with the at least one restriction portion. Besides, it is made easy to move the portable information terminal to the at least one restriction portion due to a recoil caused in releasing a pressing force applied by the second elastic member. Furthermore, transference of vibration from the vehicle to the portable information terminal can be effectively inhibited by the first and second elastic members.

The storage portion may have a dimension in a vehicle back-and-forth direction larger than dimensions of the storage portion in the vehicle up-and-down direction and in a vehicle width direction. In this case, the vehicle can be inhibited from being enlarged in the vehicle width direction; simultaneously, a space for the storage portion can be reliably produced in the vehicle back-and-forth direction. Hence, even when the lid portion is not closed , the portable information terminal can be stably put in the storage portion.

The at least one restriction portion may be opposed to the inner sidewall in the vehicle width direction. The at least one restriction portion may have a dimension in the vehicle back-and-forth direction smaller than the dimension of the storage portion in the vehicle back-and-forth direction. In this case, it is made easy to put/take the portable information terminal in/out of the storage portion.

The storage portion may further include a bottom surface portion extending in a direction intersecting with the vehicle up-and-down direction. The at least one restriction portion may include a first restriction portion extending upward from the bottom surface portion and a second restriction portion disposed apart from the first restriction portion in the vehicle back-and-forth direction. In this case, movement of the potable information terminal can be stably restricted.

The storage portion may be disposed forward of a seat of the straddled vehicle, and may be fixed to a member configured not to be turned together with a steering device of the straddled vehicle. In this case, when the rider is riding on the vehicle, the portable information terminal stored in the storage box can be easily retained, while the vehicle can be kept in balance. Besides, the portable information terminal is unlikely to be affected by turning of the steering device.

The storage portion may be disposed lateral to a steering device of the straddled vehicle. In this case, when the rider is riding on the vehicle, the portable information terminal stored in the storage box can be easily retained, while the vehicle can be kept in balance.

The shaft portion may be disposed below the storage portion. In this case, when opened and closed, the lid portion can be moved upward by as limited an amount as possible.

The storage box may further include a lid cover fixed to the lid portion outside the lid portion so as to be unitarily pivotable therewith. The lid cover may be disposed to form part of an exterior cover of the straddled vehicle. In this case, the storage box is unlikely to be recognized by a third party. Hence, the storage portion can be enhanced in anti-crime performance; simultaneously, the vehicle can be enhanced in external aesthetics. Besides, the lid portion can be protected by the lid cover.

The opening may be opened upward and outward in a vehicle width direction. In this case, it is made easy to put/take the portable information terminal in/out of the storage portion.

The storage portion may be disposed forward of a seat of the straddled vehicle. The storage portion may further include a rear surface portion that is disposed rearward of the at least one restriction portion and defines part of the opening. The rear surface portion may include an edge extending outward in the vehicle width direction and downward. In this case, when the rider is riding on the vehicle, the storage portion can be easily accessed, while the vehicle can be kept in balance.

Overall, according to the present invention, it is made possible to provide a storage box for a straddled vehicle, whereby a portable information terminal stored therein can be easily retained.

### Brief description of the drawings

FIG. 1 is a side view of a straddled vehicle.
FIG. 2 is a front view of the straddled vehicle.

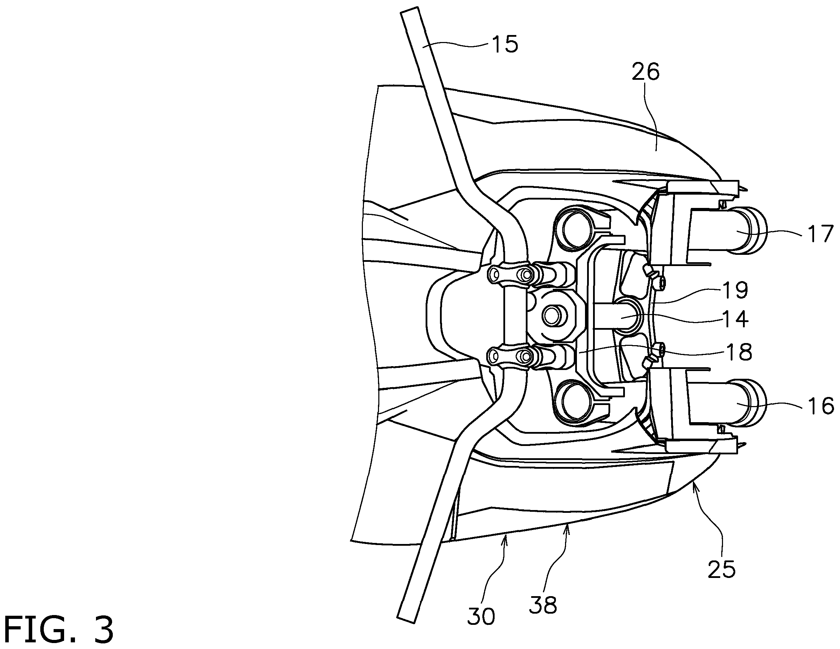

FIG. 3 is a plan view of a handle and the surroundings thereof.
FIG. 4 is a perspective view of a storage box.
FIG. 5 is a cross-sectional view of the storage box.
FIG. 6 is a partial perspective view of the storage box.
FIG. 7 is a partial perspective view of the storage box.
FIG. 8 is a diagram for explaining a state of a portable information terminal in transition from a closed state to an opened state.
FIG. 9 is a diagram for explaining a modification of an inner sidewall.

### Embodiments of the invention

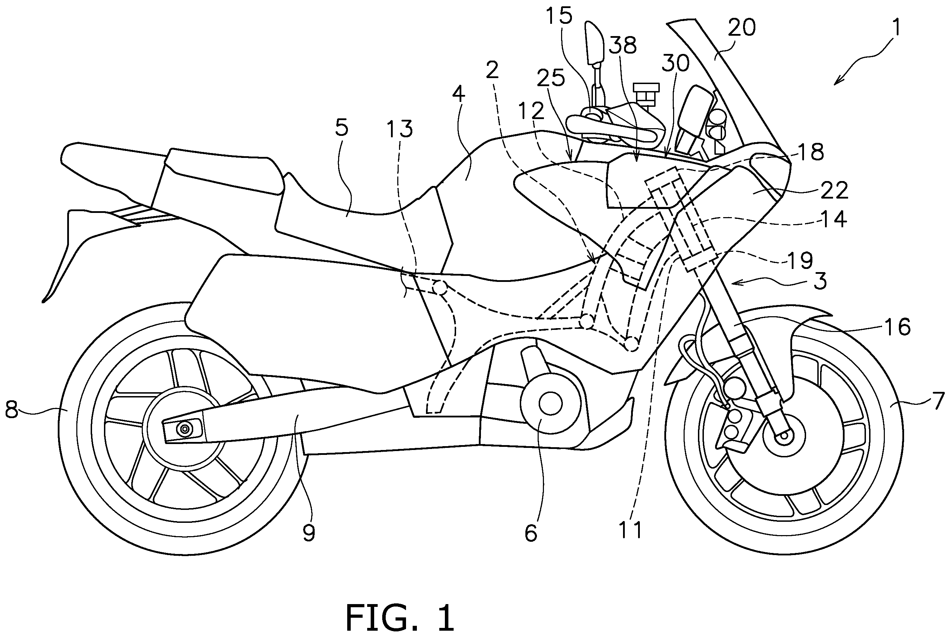

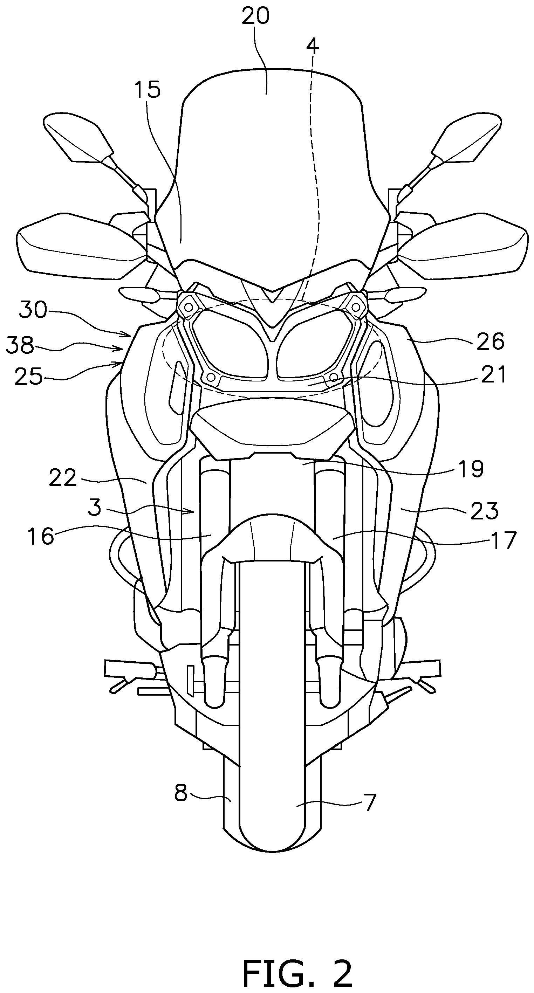

A storage box for a straddled vehicle according to a preferred embodiment will be hereinafter explained with reference to drawings. FIG. 1 is a side view of a straddled vehicle 1 including a storage box 30 according to the preferred embodiment. FIG. 2 is a front view of the straddled vehicle 1. It should be noted that in the following explanation, terms indicating such directions as "back and forth", "up and down", and "right and left" are explained based on directions seen from a rider in operation of the straddled vehicle 1. Therefore, a right-and-left direction is synonymous with a vehicle width direction. Besides, the term "outer side in a vehicle width direction" means a side far from the center of the straddled vehicle 1 in the vehicle width direction. By contrast, the term "inner side in the vehicle width direction" means a side near to the center of the straddled vehicle 1 in the vehicle width direction.

In the present specification, a condition of a constituent element extending in a vehicle back-and-forth direction (extending forward and/or rearward) is not limited to a condition of the constituent element extending in a direction orthogonal to a vehicle up-and-down direction and the vehicle width direction. The condition of the constituent element extending in the vehicle back-and-forth direction encompasses a condition of the constituent element extending to tilt relative to the vehicle up-and-down direction and/or the vehicle width direction. When described in detail, the vehicle back-and-forth direction encompasses a direction closer to the vehicle back-and-forth direction. The direction closer to the vehicle back-and-forth direction refers to, for instance, a direction that forms angles, the smaller of which is 45 degrees or less, together with the vehicle back-and-forth direction. The settings herein described are also true of the vehicle width direction (rightward and/or leftward directions) and the vehicle up-and-down direction (upward and/or downward directions).

The straddled vehicle 1 includes a vehicle body frame 2, a steering device 3, a tank-like member 4, a seat 5, a power unit 6, a front wheel 7, and a rear wheel 8.

The vehicle body frame 2 includes a head pipe 11, a main frame 12, and a rear frame 13. The main frame 12 is connected to the head pipe 11. The main frame 12 extends rearward from the head pipe 11. The rear frame 13 is connected to the main frame 12. The rear frame 13 extends rearward from the main frame 12.

The steering device 3 is supported by the head pipe 11 so as to be turnable. The steering device 3 supports the front wheel 7 such that the front wheel 7 is made rotatable. The steering device 3 includes a steering shaft 14, a handle 15, a right front fork 16, a left front fork 17, an upper bracket 18, and a lower bracket 19.

The steering shaft 14 is inserted into the head pipe 11. The handle 15 is disposed further on the upper side than the head pipe 11. The handle 15 is connected to the steering shaft 14. The handle 15 extends in the right-and-left direction. The right and left front forks 16 and 17 are connected to the steering shaft 14 through the upper and lower brackets 18 and 19. The right and left front forks 16 and 17 support the front wheel 7 such that the front wheel 7 is made rotatable.

The tank-like member 4 is disposed behind the head pipe 11. The tank-like member 4 is supported by the main frame 12. In the present preferred embodiment, the tank-like member 4 is a fuel tank. FIG. 2 shows the tank-like member 4 in a schematic manner.

The seat 5 is disposed behind the tank-like member 4. The seat 5 is disposed above the rear frame 13.

The power unit 6 is disposed below the tank-like member 4. The power unit 6 is supported by the main frame 12. The power unit 6 includes, for instance, an internal combustion engine. The power unit 6 generates a drive force. In the present preferred embodiment, the drive force generated by the power unit 6 is transferred to the rear wheel 8.

The rear wheel 8 is supported by the main frame 12 through a swing arm 9 supported by the main frame 12. The rear wheel 8 is supported by the swing arm 9 so as to be rotatable. The rear wheel 8 is driven by the drive force generated by the power unit 6.

The straddled vehicle 1 includes a wind shield 20, a front cowl 21, a right side cowl 22, a left side cowl 23, a right side cover 25 (exemplary exterior cover), and a left side cover 26. The wind shield 20 is disposed above the front cowl 21.

The front cowl 21 is disposed in front of the head pipe 11. The right side cowl 22 is disposed on the right of the head pipe 11. As shown in FIG. 1, the right side cowl 22 extends forward from the right side cover 25 in a vehicle side view. The right side cowl 22 extends downward from the right side cover 25 in the vehicle side view. The left side cowl 23 is disposed on the left of the head pipe 11. The left side cowl 23 extends forward from the left side cover 26 in the vehicle side view. The left side cowl 23 extends downward from the left side cover 26 in the vehicle side view.

The right side cover 25 is connected to the right side cowl 22. The right side cover 25 is disposed above the right side cowl 22. The right side cover 25 is disposed not only lateral to the steering device 3 but also on one side of the head pipe 11 in the vehicle width direction. The right side cover 25 is disposed on the right of the head pipe 11. The right side cover 25 overlaps with the head pipe 11 in the vehicle side view. The right side cover 25 is remote from the steering device 3 in the vehicle width direction. The right side cover 25 is disposed on the right of the steering device 3. The right side cover 25 overlaps with the steering shaft 14 of the steering device 3 in the vehicle side view. The right side cover 25 is fixed to the vehicle body frame 2 through a bracket (not shown in the drawings). The right side cover 25 may be fixed to the tank-like member 4.

The right side cover 25 extends in the vehicle back-and-forth direction. The right side cover 25 extends further rearward than the right side cowl 22. The right side cover 25 is disposed between the right side cowl 22 and the tank-like member 4 in the vehicle back-and-forth direction. The right side cover 25 is disposed lateral to the tank-like member 4. In the present preferred embodiment, a rear portion of the right side cover 25 is disposed laterally on the right of the tank-like member 4 and overlaps with the tank-like member 4 in the vehicle side view.

The left side cover 26 is connected to the left side cowl 23. The left side cover 26 is disposed above the left side cowl 23. The left side cover 26 is disposed not only lateral to the steering device 3 but also on the other side of the head pipe 11 in the vehicle width direction. The left side cover 26 is disposed on the left of the head pipe 11. The left side cover 26 overlaps with the head pipe 11 in the vehicle side view. The left side cover 26 is remote from the steering device 3 in the vehicle width direction. The left side cover 26 is disposed on the left of the steering device 3. The left side cover 26 overlaps with the steering shaft 14 of the steering device 3 in the vehicle side view.

The left side cover 26 extends in the vehicle back-and-forth direction. The left side cover 26 extends further rearward than the left side cowl 23. The left side cover 26 is disposed between the left side cowl 23 and the tank-like member 4 in the vehicle back-and-forth direction. The left side cover 26 is disposed lateral to the tank-like member 4. In the present preferred embodiment, a rear portion of the left side cover 26 is disposed laterally on the left of the tank-like member 4 and overlaps with the tank-like member 4 in the vehicle side view.

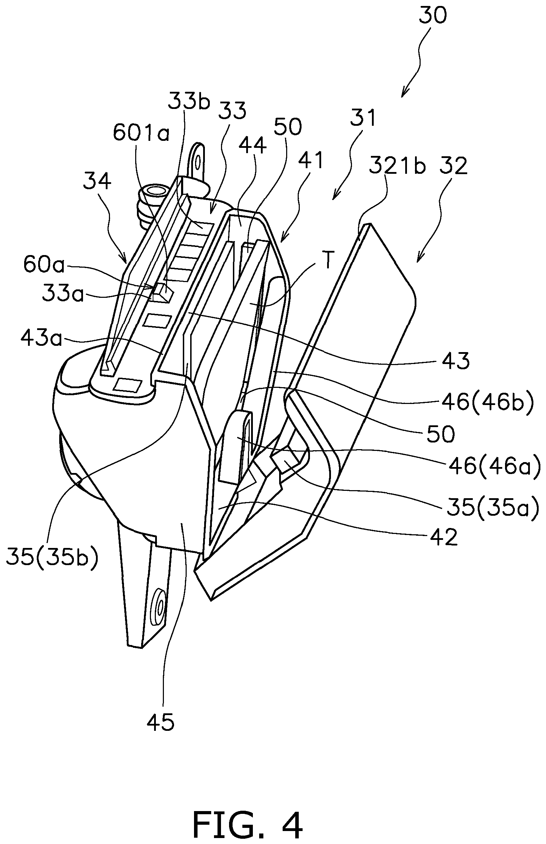

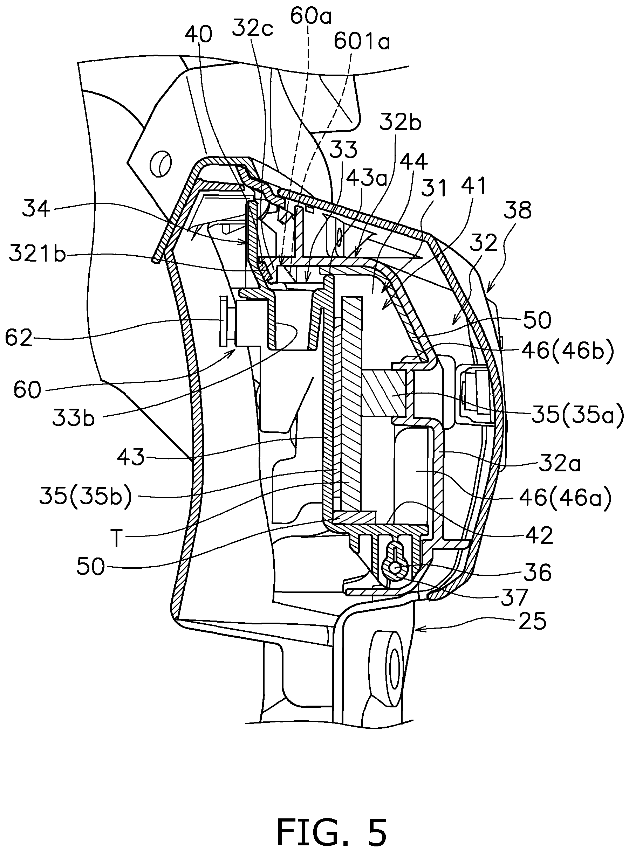

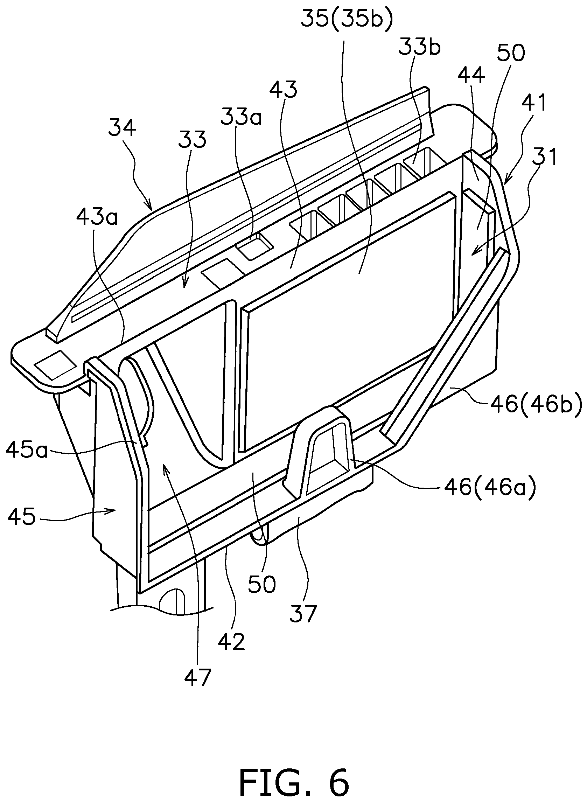

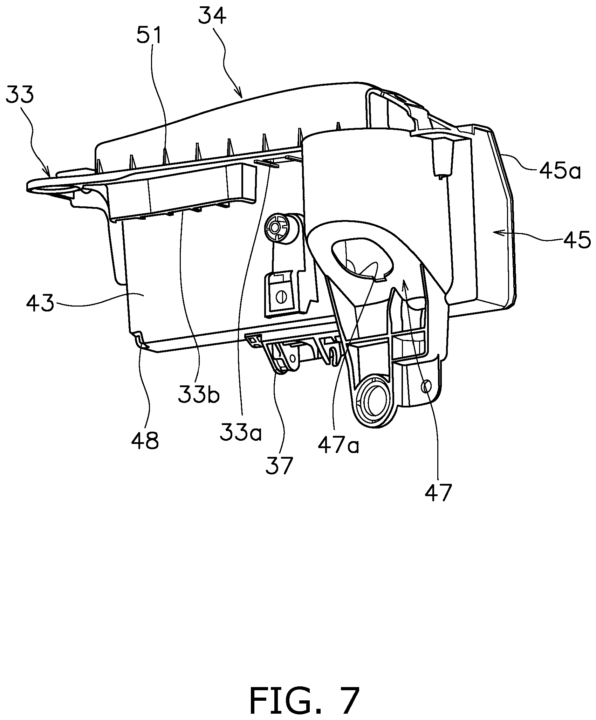

FIG. 4 is a perspective view of the storage box 30. FIG. 5 is a cross-sectional view of the storage box 30. FIGS. 6 and 7 are partial perspective views of the storage box 30. The storage box 30 stores a portable information terminal T. The portable information terminal T is, for instance, a smartphone.

The storage box 30 is disposed further on the front side than the seat 5. The storage box 30 is disposed below a turning trajectory of the handle 15. The storage box 30 is disposed further on the right side than the head pipe 11. The storage box 30 is disposed laterally on the right of the head pipe 11. The storage box 30 overlaps with the head pipe 11 in the vehicle side view.

The storage box 30 is disposed on the right of the steering device 3. The storage box 30 overlaps with the steering shaft 14 of the steering device 3 in the vehicle side view. The storage box 30 is disposed further on the upper side than the lower bracket 19. The storage box 30 is disposed inside the right side cover 25. The storage box 30 is disposed further on the front side than the tank-like member 4. The storage box 30 does not overlap with the tank-like member 4 in the vehicle side view. The storage box 30 overlaps with the tank-like member 4 in the vehicle front view.

The storage box 30 includes a storage portion 31, a lid portion 32, an upper surface portion 33, an opposed portion 34, at least one elastic member 35, a shaft portion 36, a shaft support portion 37, and a lid cover 38. It should be noted that in FIG. 4, the lid cover 38 is omitted in illustration.

The storage portion 31 is disposed on the right of the steering device 3. The storage portion 31 is fixed to a member configured not to be turned together with the steering device 3. The storage portion 31 is fixed to the right side cover 25. The dimension of the storage portion 31 is greater in the vehicle back-and-forth direction than not only in the vehicle up-and-down direction but also in the vehicle width direction. The dimension of the storage portion 31 is greater in the vehicle up-and-down direction than in the vehicle width direction.

The storage portion 31 includes an opening 41, a bottom surface portion 42, an inner sidewall 43, a front surface portion 44, a rear surface portion 45, at least one restriction portion 46, an attachment portion 47, and a drain hole 48 (see FIG. 7).

The opening 41 serves as an opening for putting-in and taking-out of the portable information terminal T and is opened not only upward but also outward in the vehicle width direction. The opening 41 is defined by the inner sidewall 43, the front surface portion 44, and the rear surface portion 45.

When the lid portion 32 is opened, the storage portion 31 is uncovered upward. When the lid portion 32 is opened, the storage portion 31 is uncovered outward in the vehicle width direction except for at the restriction portion (or portions) 46. It should be noted that in the following explanation, the state that the lid portion 32 is opened will be referred to as "an opened state", whereas the state that the lid portion 32 is closed will be referred to as "a closed state". In other words, the opened state means that the opening 41 is opened (uncovered), whereas the closed state means that the opening 41 is closed (covered). FIG. 4 shows the opened state, whereas FIG. 5 shows the closed state.

The bottom surface portion 42 serves as a portion on which the portable information terminal T is put. The portable information terminal T is put on the bottom surface portion 42 such that the lengthwise direction thereof is matched with the vehicle back-and-forth direction. The portable information terminal T is put on the bottom surface portion 42 such that one of the width directional lateral surfaces thereof is put thereon. The bottom surface portion 42 is disposed lateral to the head pipe 11. The bottom surface portion 42 extends in a direction intersecting with the vehicle up-and-down direction. The bottom surface portion 42 extends in approximately a horizontal direction. The dimension of the bottom surface portion 42 is greater in the vehicle back-and-forth direction than in the vehicle width direction. The bottom surface portion 42 tilts down forward. The bottom surface portion 42 extends to gradually approach to the head pipe 11 from the rear to the front. The front end of the bottom surface portion 42 is located further on the inner side than the rear end thereof in the vehicle width direction. The front end of the bottom surface portion 42 is located further on the rear side than that of the right side cover 25. The rear end of the bottom surface portion 42 is located further on the rear side than the head pipe 11. The rear end of the bottom surface portion 42 is located further on the front side than that of the right side cover 25.

The inner sidewall 43 extends in a direction intersecting with the vehicle width direction. The inner sidewall 43 extends in approximately both the vehicle up-and-down direction and the vehicle back-and-forth direction. The inner sidewall 43 is disposed between the front surface portion 44 and the rear surface portion 45 in the vehicle back-and-forth direction. The inner sidewall 43 is connected to the bottom surface portion 42, the front surface portion 44, and the rear surface portion 45. The inner sidewall 43 extends upward from a vehicle width directionally inner portion of the bottom surface portion 42. The inner sidewall 43 extends to gradually approach to the head pipe 11 from rear to front. The front end of the inner sidewall 43 is located further on the inner side than the rear end thereof in the vehicle width direction. In the closed state, the inner sidewall 43 is opposed to the lid portion 32 in the vehicle width direction.

The front surface portion 44 extends in a direction intersecting with the vehicle back-and-forth direction. The front surface portion 44 extends upward from the front end of the bottom surface portion 42. The front surface portion 44 extends outward from the front end of the inner sidewall 43 in the vehicle width direction.

The rear surface portion 45 extends in a direction intersecting with the vehicle back-and-forth direction. The rear surface portion 45 is opposed to the front surface portion 44 in the vehicle back-and-forth direction. The rear surface portion 45 extends upward from the rear end of the bottom surface portion 42. The rear surface portion 45 extends outward from the rear end of the inner sidewall 43 in the vehicle width direction. The rear surface portion 45 is located further on the rear side than the head pipe 11. The rear surface portion 45 is located further on the front side than the rear end of the right side cover 25. The rear surface portion 45 is disposed further on the rear side than the restriction portion (or portions) 46. The rear surface portion 45 defines part of the opening 41. The rear surface portion 45 includes an edge 45a extending not only downward but also outward in the vehicle width direction. The edge 45a is disposed on the upper end of a vehicle width directionally outer portion of the rear surface portion 45. The edge 45a defines part of the opening 41.

The restriction portion (or portions) 46 restricts the portable information terminal T, put on the bottom surface portion 42, from moving outward in the vehicle width direction. In the opened state, a space is produced between the inner sidewall 43 and the restriction portion (or portions) 46 so as to allow the portable information terminal T to tilt toward the restriction portion (or portions) 46.

The storage portion 31 stores the portable information terminal T such that the portable information terminal T stands between the inner sidewall 43 and the restriction portion (or portions) 46. The standing state of the portable information terminal T means that a lateral surface of the portable information terminal T is put on the bottom surface portion 42. In the present preferred embodiment, the storage portion 31 stores the portable information terminal T such that a width directional lateral surface of the portable information terminal T is put on the bottom surface portion 42. The storage portion 31 may be configured to store the portable information terminal T such that a lengthwise directional lateral surface of the portable information terminal T is put on the bottom surface portion 42.

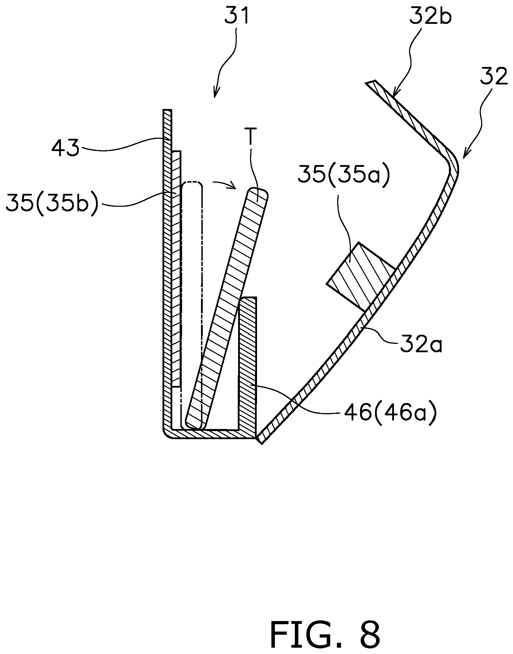

As shown in FIG. 5, the restriction portion (or portions) 46 is remote from the portable information terminal T in the closed state. When the lid portion 32 transitions from the closed state shown in FIG. 5 to the opened state shown in FIG. 4, the restriction portion (or portions) 46 contacts with the portable information terminal T on the front or rear surface side of the portable information terminal T so as to restrict movement of the portable information terminal T. When described in detail, as schematically shown in FIG. 8, in transition of the lid portion 32 from the closed state to the opened state, the portable information terminal T tilts toward the restriction portion (or portions) 46 due to a recoil caused in releasing the pressing force applied by the elastic member (or members) 35 and is thereby moved to the restriction portion (or portions) 46. Accordingly, the portable information terminal T contacts on the front or rear surface side thereof with the restriction portion (or portions) 46, whereby movement thereof is restricted. In other words, at least an upper portion of the portable information terminal T is remote from the inner sidewall 43 in the closed state; hence, the portable information terminal T is retained by the restriction portion (or portions) 46, while tilting with respect to the inner sidewall 43.

The first restriction portion (or portions) 46a is disposed further on the outer side than the inner sidewall 43 in the vehicle width direction. The restriction portion (or portions) 46 is opposed to the inner sidewall 43 in the vehicle width direction. The dimension of the restriction portion (or portions) 46 is preferably greater than or equal to a quarter of, and less than or equal to three quarters of, that of the inner sidewall 43 in the vehicle up-and-down direction. The dimension of the restriction portion (or portions) 46 is preferably less than that of the storage portion 31 in the vehicle back-and-forth direction.

The restriction portion or portions 46 include a first restriction portion 46a and a second restriction portion 46b. The first restriction portion 46a extends upward from the bottom surface portion 42. The first restriction portion 46a is disposed further on the lower side than the upper end of the inner sidewall 43. The dimension of the first restriction portion 46a is greater than or equal to a quarter of, and less than or equal to three quarters of, that of the inner sidewall 43 in the vehicle up-and-down direction. The dimension of the first restriction portion 46a is less than that of the storage portion 31 in the vehicle back-and-forth direction. The dimension of the first restriction portion 46a is less than that of the inner sidewall 43 in the vehicle back-and-down direction.

The second restriction portion 46b is disposed remote from the first restriction portion 46a in the vehicle back-and-forth direction. The second restriction portion 46b is disposed further on the front side than the first restriction portion 46a. The second restriction portion 46b extends upward from the bottom surface portion 42 and is connected to the front surface portion 44. The upper edge of the second restriction portion 46b extends not only rearward but also downward. The dimension of the second restriction portion 46b is greater than or equal to a quarter of, and less than or equal to three quarters of, that of the inner sidewall 43 in the vehicle up-and-down direction. The dimension of the second restriction portion 46b is less than that of the inner sidewall 43 in the vehicle back-and-forth direction.

The attachment portion 47 serves as a portion for attaching a power supply device (not shown in the drawings). The power supply device is, for instance, a power socket provided as an accessory socket. The power supply device may connect therethrough the portable information terminal T and an electronic device installed in the straddled vehicle 1 such that intercommunication of data is enabled between the portable information terminal T and the electronic device. The attachment portion 47 is formed by bulging a rear portion of the inner sidewall 43 inward in the vehicle width direction. The attachment portion 47 includes an attachment hole 47a to which the power supply device is attached. The attachment hole 47a is disposed further on the inner side than the bottom surface portion 42 in the vehicle width direction. The attachment hole 47a is disposed below the upper surface portion 33.

As shown in FIG. 7, the drain hole 48 is disposed in the bottom surface portion 42. The drain hole 48 is provided in the vehicle width directionally inner one of the front corners of the bottom surface portion 42.

Cushioning members 50 are disposed on the upper surface of the bottom surface portion 42, the rear surface of the front surface portion 44, the front surface of the rear surface portion 45, and the internal surface of the lid portion 32, respectively.

The lid portion 32 closes (covers) and opens (uncovers) the opening 41. The lid portion 32 is capable of transitioning to the closed state and the opened state. In the closed state, the lid portion 32 covers the bottom surface portion 42, the inner sidewall 43, the front surface portion 44, the rear surface portion 45, and the upper surface portion 33. The lid portion 32 is supported by the shaft portion 36 so as to be pivotable. The lid portion 32 is pivotable between an opened position shown in FIG. 4 and a closed position shown in FIG. 5. The lid portion 32 is set to be pivotable in an angular range of approximately 20° to 30°. It should be noted that the lid portion 32 is preferably pivotable in an angular range of 45° or less. The lid portion 32 is pivotable with respect to the right side cover 25.

The lid portion 32 is configured to be opened outward in the vehicle width direction with respect to the storage portion 31. The lid portion 32 is configured to be opened outward in the vehicle width direction with respect to the inner sidewall 43. When moved from the closed position to the opened position, the lid portion 32 is opened outward in the vehicle width direction. The lid portion 32 is configured to be opened in a direction that the portable information terminal T tilts in transition from the closed state to the opened state. In other words, the lid portion 32 tilts in an identical direction to the portable information terminal T with respect to the inner sidewall 43 in transition from the closed state to the opened state. As shown in FIGS. 4 and 5, when the lid portion 32 is in the opened position, an upper portion thereof is located further on the outer side in the vehicle width direction than when the lid portion 32 is in the closed position. The lid portion 32 is biased to the opened position by a hinge spring (not shown in the drawings) disposed below the storage portion 31.

As shown in FIG. 5, the lid portion 32 includes a wall portion 32a, a canopy portion 32b, and an engaged portion 32c. In the closed state, the wall portion 32a extends in a direction intersecting with the vehicle width direction. In the closed state, the wall portion 32a is opposed to the inner sidewall 43 in the vehicle width direction. The canopy portion 32b extends inward from the upper end of the wall portion 32a in the vehicle width direction. In the closed state, the canopy portion 32b covers the upper surface portion 33. In the closed state, a distal end portion 321b, which is a vehicle width directionally inner end portion of the canopy portion 32b, is located further on the inner side than the inner sidewall 43 in the vehicle width direction. The engaged portion 32c is provided on the lower surface of the distal end portion 321b of the canopy portion 32b. The engaged portion 32c extends downward from the lower surface of the distal end portion 321b of the canopy portion 32b. The engaged portion 32c is shaped to recess from the inner side to the outer side in the vehicle width direction.

The upper surface portion 33 extends in a direction intersecting with the vehicle up-and-down direction. The upper surface portion 33 extends from the storage portion 31 in a direction of closing the lid portion 32. The upper surface portion 33 extends inward from the storage portion 31 in the vehicle width direction. In the vicinity of the upper end of the inner sidewall 43 of the storage portion 31, the upper surface portion 33 extends inward from the inner sidewall 43 in the vehicle width direction. The upper surface portion 33 is disposed further on the lower side than the aforementioned upper end (43a) of the inner sidewall 43. The upper end 43a of the inner sidewall 43 protrudes further upward than the upper surface portion 33. Because of this, a step is provided between the upper surface portion 33 and the inner sidewall 43. In the closed state, the upper surface portion 33 is disposed below the canopy portion 32b so as to be covered therewith.

The upper surface portion 33 includes a through hole 33a and a plurality of drain holes 33b. The through hole 33a and the plural drain holes 33b are disposed between the opposed portion 34 and the storage portion 31. The through hole 33a and the plural drain holes 33b are disposed between the opposed portion 34 and the inner sidewall 43. The through hole 33a and the plural drain holes 33b penetrate the upper surface portion 33 in the vehicle up-and-down direction. The through hole 33a is provided in the vicinity of the middle of the upper surface portion 33 in the vehicle back-and-forth direction. The plural drain holes 33b are provided on the front side and the rear side of the through hole 33a.

The opposed portion 34 is connected to the upper surface portion 33. The opposed portion 34 extends upward from the upper surface portion 33. The opposed portion 34 is disposed further on the inner side than the plural drain holes 33b in the vehicle width direction. In the closed state, the opposed portion 34 is opposed to the distal end portion 321b of the canopy portion 32b. In the closed state, a seal member 40 is disposed between the opposed portion 34 and the distal end portion 321b of the canopy portion 32b so as to seal a gap produced therebetween. The seal member 40 is fixed to the opposed portion 34. The seal member 40 may be fixed to the distal end portion 321b of the canopy portion 32b. As shown in FIG. 7, a plurality of ribs 51 are provided on the inner side of the opposed portion 34 in the vehicle width direction so as to be connected to the upper surface portion 33 and the opposed portion 34.

The elastic member (or members) 35 is disposed on at least either the lid portion 32 or the inner sidewall 43. In the closed state, the portable information terminal T is pressed by the elastic member (or members) 35 in the thickness direction thereof, while interposed between the elastic member (or members) 35 and either the lid portion 32 or the inner sidewall 43; accordingly, the portable information terminal T is retained in the storage portion 31. In the present preferred embodiment, in the closed state, the elastic member (or members) 35 presses the portable information terminal T in the vehicle width direction. For example, the elastic member (or members) 35 is made of such a material as urethane, rubber, or so forth.

The one or more elastic members 35 include a first elastic member 35a and a second elastic member 35b. The first elastic member 35a is disposed on the lid portion 32. The first elastic member 35a is fixed to the internal surface of the wall portion 32a of the lid portion 32. In the closed state, the first elastic member 35a is disposed above the first restriction portion 46a. The first elastic member 35a, at least in part, is disposed at an identical height to the center of the inner sidewall 43 in the vehicle up-and-down direction. In the closed state, the first elastic member 35a overlaps with the height center of the inner sidewall 43 in the vehicle side view. When the portable information terminal T is stored in the storage portion 31 in the closed state, the first elastic member 35a extends in the lengthwise direction of the portable information terminal T. In the present preferred embodiment, the first elastic member 35a extends in the vehicle back-and-forth direction.

As shown in FIG. 5, the first restriction portion 46a herein extends from the bottom surface portion 42 to the vicinity of the first elastic member 35a. In the closed state, the first restriction portion 46a is disposed below the first elastic member 35a. The height of the first restriction portion 46a is greater than or equal to a half of the dimension from the bottom surface portion 42 to the first elastic member 35a in the closed state. The second restriction portion 46b, in part, is disposed further on the upper side than the first elastic member 35a.

The second elastic member 35b is disposed on the inner sidewall 43. The second elastic member 35b is fixed to the surface of the inner sidewall 43 on the outer side of the inner sidewall 43 in the vehicle width direction. In the closed state, the second elastic member 35b is opposed to the first elastic member 35a in the vehicle width direction. The second elastic member 35b is disposed at least in part at an identical height to the center of the inner sidewall 43 in the vehicle up-and-down direction. In the closed state, the second elastic member 35b overlaps with the height center of the inner sidewall 43 in the vehicle side view. When the portable information terminal T is stored in the storage portion 31, the second elastic member 35b extends in the lengthwise direction of the portable information terminal T. In the present preferred embodiment, the second elastic member 35b extends in the vehicle back-and-forth direction.

The shaft portion 36 supports the lid portion 32 such that the lid portion 32 is made pivotable. The shaft portion 36 extends in the vehicle back-and-forth direction. In the present preferred embodiment, the shaft portion 36 extends to tilt with respect to not only the vehicle up-and-down direction but also the vehicle width direction. The shaft portion 36 extends from the vehicle rear side to the vehicle front side so as to tilt down to the inner side in the vehicle width direction. It should be noted that the shaft portion 36 may extend in parallel to the vehicle back-and-forth direction, or alternatively, may extend to tilt with respect to either the vehicle up-and-down direction or the vehicle width direction.

The shaft portion 36 is disposed below the storage portion 31. The shaft portion 36 overlaps with the storage portion 31 in a vehicle plan view. The shaft portion 36 is supported by the shaft support portion 37. The shaft portion 36 is disposed further on the outer side than the inner sidewall 43 in the vehicle width direction.

The shaft support portion 37 is disposed below the storage portion 31. The shaft support portion 37 is provided on a lower portion of the bottom surface portion 42.

The lid cover 38 is fixed to the lid portion 32 outside the lid portion 32 so as to be unitarily pivotable therewith. For example, at least one resin rivet is inserted into the lid cover 38 from the inside of the lid portion 32, whereby the lid cover 38 is fixed to the lid portion 32. The lid cover 38 is disposed to compose part of the right side cover 25 in the vehicle side view. For example, the lid cover 38 is disposed to be flush with the right side cover 25 at a portion thereof adjoining the right side cover 25.

As shown in FIG. 5, the straddled vehicle 1 includes an opening and closing mechanism 60 and an operating member 62. When the lid portion 32 is moved to the closed position, the opening and closing mechanism 60 keeps the lid portion 32 in the closed state. The opening and closing mechanism 60 releases the closed state in response to operating the operating member 62.

As shown in FIGS. 4 and 5, the opening and closing mechanism 60 includes an engaging protrusion 60a. The engaging protrusion 60a is disposed to be protrusible and retractable with respect to the through hole 33a. The engaging protrusion 60a is biased upward by an urging member (not shown in the drawings). In the closed state, the engaging protrusion 60a protrudes upward from the through hole 33a so as to engage with the engaged portion 32c of the lid portion 32. Accordingly, the lid portion 32 is kept in the closed state, while being restricted from moving to the opened position. On the other hand, when the operating member 62 is operated, the engaging protrusion 60a is pulled into the through hole 33a. When the operating member 62 is operated in the closed state, the engaged portion 32c of the lid portion 32 is released from being engaged with the engaging protrusion 60a. Accordingly, the lid portion 32 is moved from the closed position to the opened position.

The engaging protrusion 60a includes a slope 601a. The slope 601a is provided on the upper surface of the engaging protrusion 60a. The slope 601a tilts down to the outer side in the vehicle width direction. When the lid portion 32 is moved from the opened position to the closed position, the distal end portion 321b of the canopy portion 32b of the lid portion 32 contacts with the slope 601a from the outer side in the vehicle width direction. Accordingly, the engaging protrusion 60a is pressed downward to be pulled into the through hole 33a. When the engaged portion 32c of the lid portion 32 gets over the engaging protrusion 60a to the inner side in the vehicle width direction, the engaging protrusion 60a engages with the engaged portion 32c of the lid portion 32, whereby the lid portion 32 is restricted from moving to the opened position.

The operating member 62 serves as a member to be operated for causing the lid portion 32 to perform an opening action. The operating member 62 is a member to be operated for pulling the engaging protrusion 60a into the through hole 33a. The operating member 62 is coupled to the opening and closing mechanism 60. The operating member 62 is a member operable by pressing. The operating member 62 is, for instance, a push button pressable from the inner side to the outer side in the vehicle width direction. The operating member 62 is disposed on the external surface of a vehicle width directionally inner portion of the storage portion 31.

In the storage box 30 for the straddled vehicle 1 according to the present aspect, when the lid portion 32 of the storage box 30 is closed, the portable information terminal T stored in the storage portion 31 of the storage box 30 is retained therein, while being pressed by the elastic member (or members) 35 in the thickness direction thereof. Accordingly, the portable information terminal T can be retained by an easy operation, i.e., only by pivoting the lid portion 32 of the storage box 30. Therefore, when a rider is riding on the vehicle, for instance, the portable information terminal T stored in the storage box 30 can be easily retained, while the vehicle can be kept in balance.

The portable information terminal T is stored to stand between the inner sidewall 43 and the restriction portion (or portions) 46; besides, a space is produced between the inner sidewall 43 and the restriction portion (or portions) so as to allow the portable information terminal T to tilt toward the restriction portion (or portions) 46 when the lid portion 32 is opened. Because of this, when the rider is riding on the vehicle, for instance, it is made easy for the rider to put/take the portable information terminal T in/out of the storage portion 31.

The inner sidewall 43 extends in approximately the vehicle up-and-down direction; hence, in transition of the lid portion 32 from the closed state to the opened state, it is made possible to move the portable information terminal T to the restriction portion (or portions) 46 due to the recoil caused in releasing the pressing force applied by the elastic member (or members) 35 to press the portable information terminal T. Because of this, when the rider riding on the vehicle opens the lid portion 32, for instance, it is made easy for the rider to take the portable information terminal T out of the storage portion 31.

The first elastic member 35a is disposed on the lid portion 32; hence, when the lid portion 32 transitions from the opened state to the closed state, the portable information terminal T can be supported by the first elastic member 35a until contacting with the restriction portion (or portions) 46. Besides, the shaft portion 36 is disposed below the storage portion 31; hence, even when the portable information terminal T slips out of the storage portion 31 in the opened state, the portable information terminal T can be inhibited from dropping from the storage box 30 by the lid portion 32.

The storage box 30 is fixed to a member configured not to be turned together with the steering device 3; hence, when the rider is riding on the vehicle, the portable information terminal T stored in the storage box 30 can be easily retained, while the vehicle can be kept in balance. Besides, the portable information terminal T is unlikely to be affected by turning of the steering device 3.

The opening 41 is opened not only upward but also outward in the vehicle width direction; besides, the restriction portion (or portions) 46 is not provided on the storage portion 31 entirely in the vehicle width direction. Because of this, the portable information terminal T can be easily put/taken in/out of the storage portion 31.

One preferred embodiment of the present invention has been explained above. However, the present invention is not limited to the preferred embodiment described above, and a variety of changes can be made without departing from the claims that define present invention.

The storage box 30 may be changed in layout. The storage box 30 may be disposed inside the left side cover 26. The storage portion 31 may be changed in configuration. The opening and closing mechanism 60 and the operating member 62 may be changed in configuration.

The straddled vehicle 1 may be an electric straddled vehicle. In this case, the power unit 6 may include an electric motor, while the tank-like member 4 may include a battery. The battery may be stored in the tank-like member 4.

The straddled vehicle 1 may be a vehicle of a scooter type. In this case, the shaft portion 36 may extend in the vehicle width direction; besides, the storage box 30, at least in part, may be disposed in, for instance, a leg shield disposed in front of the seat 5.

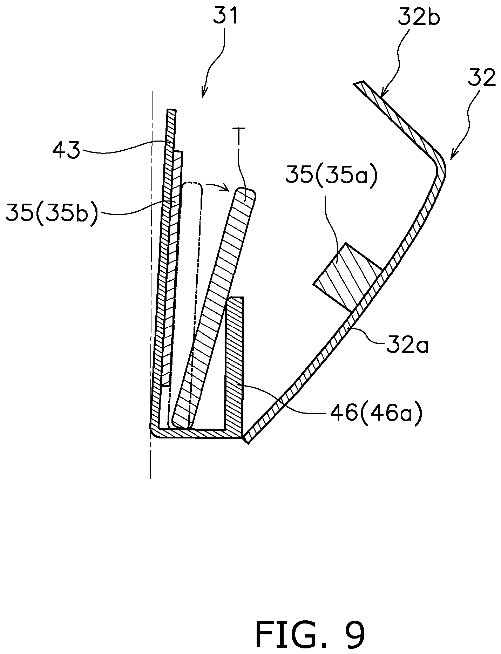

As shown in FIG. 9, the inner sidewall 43 may extend to gradually approach the restriction portion (or portions) 46 from below to above. In other words, in transition from the closed state to the opened state, the storage box 30 may be configured to move the portable information terminal T to the restriction portion (or portions) 46 by the tilt of the inner sidewall 43. The tilt of the inner sidewall 43 may be realized by changing the thickness of the second elastic member 35b. In this case, in transition from the closed state to the opened state, the portable information terminal T can be easily moved to the restriction portion (or portions) 46. Alternatively, the upper surface of the bottom surface portion 42 may tilt down toward the restriction portion (or portions) 46.

### REFERENCE SIGNS LIST

- 1: Straddled vehicle

- 3: Steering device
- 5: Seat
- 25: Right side cover (exemplary side cover)
- 30: Storage box
- 31: Storage portion
- 32: Lid portion
- 34: Opposed portion
- 35: Elastic member
- 36: Shaft portion
- 38: Lid cover
- 41: Opening
- 42: Bottom surface portion
- 43: Inner sidewall
- 45: Rear surface portion
- 45a: Edge
- 46: Restriction portion
- T: Portable Information Terminal

## Claims

1. A storage box (30) for a straddled vehicle (1), the storage box (30) being configured to store a portable information terminal (T), the storage box (30) comprising:
a storage portion (31) including an opening (41) for putting-in and taking-out of the portable information terminal (T), an inner sidewall (43), and at least one restriction portion (46) opposed to the inner sidewall (43), the storage portion (31) being configured to store the portable information terminal (T) such that the portable information terminal (T) stands between the inner sidewall (43) and the at least one restriction portion (46);
a lid portion (32) capable of transitioning to a closed state and an opened state, the lid portion (32) being configured to close the opening in the closed state, the lid portion (32) being configured to open the opening in the opened state, the lid portion (32) being opposed to the inner sidewall (43) in the closed state;
at least one elastic member (35) disposed on at least either the lid portion (32) or the inner sidewall (43), the at least one elastic member (35) being configured to press the portable information terminal (T) in a thickness direction of the portable information terminal (T) between the lid portion (32) or the inner sidewall (43) in the closed state to hold the portable information terminal (T) in the storage portion (31); and
a shaft portion (36) configured to pivotably support the lid portion (32), wherein
the inner sidewall (43) extends in approximately a vehicle up-and-down direction or extends to gradually approach the at least one restriction portion (46) from below to above,
the inner sidewall (43) and the at least one restriction portion (46) produce a space therebetween so as to allow the portable information terminal (T) to tilt toward the at least one restriction portion (46) in the opened state, and
the at least one restriction portion (46) is apart from the portable information terminal (T) in the closed state,
**characterized in that** the at least one restriction portion (46) contacts with the portable information terminal (T) on a front or rear surface side of the portable information terminal (T) so as to restrict movement of the portable information terminal (T) when the lid portion (32) transitions from the closed state to the opened state.

2. The storage box for the straddled vehicle (1) according to claim 1, wherein the at least one elastic member (35) is disposed at least in part at an identical height to a center of the inner sidewall (43) in the vehicle up-and-down direction in the closed state.

3. The storage box for the straddled vehicle (1) according to claim 2, wherein the at least one elastic member (35) extends in a lengthwise direction of the portable information terminal (T), when the portable information terminal (T) is stored in the storage portion (31) in the closed state.

4. The storage box for the straddled vehicle (1) according to claim 1, wherein the at least one elastic member (35) is disposed on the lid portion (32).

5. The storage box for the straddled vehicle (1) according to claim 4, wherein the at least one restriction portion (36) is disposed below the at least one elastic member (35) in the closed state.

6. The storage box for the straddled vehicle (1) according to claim 5, wherein
the storage portion (31) further includes a bottom surface portion (42) extending in a direction intersecting with the vehicle up-and-down direction,
the at least one restriction portion (46) extends upward from the bottom surface portion (42), and
the at least one restriction portion (46) has a height larger than or equal to a half of a dimension from the bottom surface portion (42) to the at least one elastic member (35) in the closed state.

7. The storage box for the straddled vehicle (1) according to claim 6, wherein the at least one restriction portion (46) extends from the bottom surface portion (42) to a vicinity of the at least one elastic member (35).

8. The storage box for the straddled vehicle (1) according to claim 6, wherein the at least one restriction portion (46) has a dimension larger than or equal to a quarter of and less than or equal to three quarters of a dimension of the inner sidewall (43) in the vehicle up-and-down direction.

9. The storage box for the straddled vehicle (1) according to claim 1, wherein the at least one elastic member (35) includes a first elastic member (35a) and a second elastic member (35b), the first elastic member (35a) being disposed on the lid portion (32), the second elastic member (35b) being disposed on the inner sidewall (43) of the storage portion (31).

10. The storage box for the straddled vehicle (1) according to any one of claims 1 to 9, wherein the storage portion (31) has a dimension in a vehicle back-and-forth direction larger than dimensions of the storage portion (31) in the vehicle up-and-down direction and in a vehicle width direction.

11. The storage box for the straddled vehicle (1) according to claim 10, wherein
the at least one restriction portion (46) is opposed to the inner sidewall (43) in the vehicle width direction, and
the at least one restriction portion (46) has a dimension in the vehicle back-and-forth direction smaller than the dimension of the storage portion (31) in the vehicle back-and-forth direction.

12. The storage box for the straddled vehicle (1) according to claim 10, wherein
the storage portion (31) further includes a bottom surface portion (42) extending in a direction intersecting with the vehicle up-and-down direction, and
the at least one restriction portion (46) includes a first restriction portion (46a) and a second restriction portion (46b), the first restriction portion (46a) extending upward from the bottom surface portion, the second restriction portion (46b) disposed apart from the first restriction portion (46a) in the vehicle back-and-forth direction.

13. The storage box for the straddled vehicle (1) according to any one of claims 1 to 9, wherein the shaft portion (36) is disposed below the storage portion (31).

14. The storage box for the straddled vehicle (1) according to any one of claims 1 to 9, wherein the opening (41) is opened upward and outward in a vehicle width direction.

## Patentansprüche

1. Aufbewahrungsfach (30) für ein Spreizsitz-Fahrzeug (1), wobei das Aufbewahrungsfach zum Aufbewahren eines tragbaren Informations-Endgerätes (T) ausgeführt ist und das Aufbewahrungsfach (30) umfasst:
einen Aufbewahrungsabschnitt (31), der eine Öffnung (41) zum Einführen und Herausnehmen des tragbaren Informations-Endgerätes (T), eine innere Seitenwand (43) sowie wenigstens einen Einschränkungsabschnitt (46) enthält, der der inneren Seitenwand (43) gegenüberliegt, wobei der Aufbewahrungsabschnitt (31) so ausgeführt ist, dass das tragbare Informations-Endgerät (T) so aufbewahrt wird, dass das tragbare Informations-Endgerät (T) zwischen der inneren Seitenwand (43) und dem wenigstens einen Einschränkungsabschnitt (46) steht;
einen Deckelabschnitt (32), der in einen geschlossenen Zustand und einen geöffneten Zustand übergehen kann, wobei der Deckelabschnitt (32) so ausgeführt ist, dass er in dem geschlossenen Zustand die Öffnung verschließt, der Deckelabschnitt (32) so ausgeführt ist, dass er in dem geöffneten Zustand die Öffnung öffnet, und der Deckelabschnitt (32) in dem geschlossenen Zustand der inneren Seitenwand (43) gegenüberliegt;
wenigstens ein elastisches Element (35), das wenigstens entweder an dem Deckelabschnitt (32) oder der inneren Seitenwand (43) angeordnet ist, wobei das wenigstens eine elastische Element (35) so ausgeführt ist, dass es in dem geschlossenen Zustand das tragbare Informations-Endgerät (T) in einer Dickenrichtung des tragbaren Informations-Endgerätes (T) zwischen dem Deckelabschnitt (32) oder der inneren Seitenwand (43) presst, um das tragbare Informations-Endgerät (T) in dem Aufbewahrungsabschnitt (31) zu halten; sowie
einen Wellenabschnitt (36), der so ausgeführt ist, dass er den Deckelabschnitt (32) schwenkbar lagert, wobei
die innere Seitenwand (43) sich annähernd in einer Fahrzeug-Höhenrichtung erstreckt oder sich so erstreckt, dass sie sich von unten nach oben allmählich dem wenigstens einen Einschränkungsabschnitt (46) annähert,
zwischen der inneren Seitenwand (43) und dem wenigstens einen Einschränkungsabschnitt (36) eine Form gebildet wird, die es dem tragbaren Informations-Endgerät (T) ermöglicht, sich in dem geöffneten Zustand zu dem wenigstens einen Einschränkungsabschnitt (46) hin zu neigen, und
der wenigstens eine Einschränkungsabschnitt (46) in dem geschlossenen Zustand von dem tragbaren Informations-Endgerät (T) getrennt ist,
**dadurch gekennzeichnet, dass** der wenigstens eine Einschränkungsabschnitt (46) mit dem tragbaren Informations-Endgerät (T) an einer Vorder- oder einer Hinterseite des tragbaren Informations-Endgerätes (T) in Kontakt kommt, um Bewegung des tragbaren Informations-Endgerätes (T) einzuschränken, wenn der Deckelabschnitt (32) von dem geschlossenen Zustand in den geöffneten Zustand übergeht.

2. Aufbewahrungsfach für das Spreizsitz-Fahrzeug (1) nach Anspruch 1, wobei das wenigstens eine elastische Element (35) in dem geschlossenen Zustand in der Fahrzeug-Höhenrichtung wenigstens teilweise in einer gleichen Höhe wie eine Mitte der inneren Seitenwand (43) angeordnet ist.

3. Aufbewahrungsfach für das Spreizsitz-Fahrzeug (1) nach Anspruch 2, wobei das wenigstens eine elastische Element (35) sich in einer Längsrichtung des tragbaren Informations-Endgerätes (T) erstreckt, wenn das tragbare Informations-Endgerät (T) in dem geschlossenen Zustand in dem Aufbewahrungsabschnitt (31) aufbewahrt ist.

4. Aufbewahrungsfach für das Spreizsitz-Fahrzeug (1) nach Anspruch 1, wobei das wenigstens eine elastische Element (35) an dem Deckelabschnitt (32) angeordnet ist.

5. Aufbewahrungsfach für das Spreizsitz-Fahrzeug (1) nach Anspruch 4, wobei der wenigstens eine Einschränkungs-Abschnitt (36) in dem geschlossenen Zustand unterhalb des wenigstens einen elastischen Elementes (35) angeordnet ist.

6. Aufbewahrungsfach für das Spreizsitz-Fahrzeug (1) nach Anspruch 5, wobei
der Aufbewahrungsabschnitt (31) des Weiteren einen Unterseitenabschnitt (42) enthält, der sich in einer Richtung erstreckt, die die Fahrzeug-Höhenrichtung schneidet,
der wenigstens eine Einschränkungsabschnitt (46) sich von dem Unterseitenabschnitt (42) nach oben erstreckt und
der wenigstens eine Einschränkungsabschnitt (46) eine Höhe hat, die größer ist als oder genauso groß wie eine Hälfte einer Abmessung von dem Unterseitenabschnitt (42) zu dem wenigstens einen elastischen Element (35) in dem geschlossenen Zustand.

7. Aufbewahrungsfach für das Spreizsitz-Fahrzeug (1) nach Anspruch sechs, wobei der wenigstens eine Einschränkungsabschnitt (46) sich von dem Unterseitenabschnitt (42) bis in die Nähe des wenigstens einen elastischen Elementes (35) erstreckt.

8. Aufbewahrungsfach für das Spreizsitz-Fahrzeug (1) nach Anspruch 6, wobei der wenigstens eine Einschränkungsabschnitt (46) in der Fahrzeug-Höhenrichtung eine Abmessung hat, die größer ist als oder genauso groß wie ein Viertel und kleiner als oder genauso groß wie drei Viertel einer Abmessung der inneren Seitenwand (43).

9. Aufbewahrungsfach für das Spreizsitz-Fahrzeug (1) nach Anspruch 1, wobei das wenigstens eine elastische Element (35) ein erstes elastisches Element (35a) sowie ein zweites elastisches Element (35b) enthält, das erste elastische Element (35a) an dem Deckelabschnitt (32) angeordnet ist und das zweite elastische Element (35b) an der inneren Seitenwand (43) des Aufbewahrungsabschnitts (31) angeordnet ist.

10. Aufbewahrungsfach für das Spreizsitz-Fahrzeug (1) nach einem der Ansprüche 1 bis 9, wobei der Aufbewahrungsabschnitt (31) eine Abmessung in einer Fahrzeug-Längsrichtung hat, die größer ist als Abmessungen des Aufbewahrungsabschnitts (31) in der Fahrzeug-Höhenrichtung sowie in einer Fahrzeug-Breitenrichtung.

11. Aufbewahrungsfach für das Spreizsitz-Fahrzeug (1) nach Anspruch 10, wobei
der wenigstens eine Einschränkungsabschnitt (46) der inneren Seitenwand (43) in der Fahrzeug-Breitenrichtung gegenüberliegt, und
der wenigstens eine Einschränkungsabschnitt (46) eine Abmessung in der Fahrzeug-Längsrichtung hat, die kleiner ist als die Abmessung des Aufbewahrungsabschnitts (31) in der Fahrzeug-Längsrichtung.

12. Aufbewahrungsfach für das Spreizsitz-Fahrzeug (1) nach Anspruch 10, wobei
der Aufbewahrungsabschnitt (31) des Weiteren einen Unterseitenabschnitt (42) enthält, der sich in einer Richtung erstreckt, die die Fahrzeug-Höhenrichtung schneidet, und
der wenigstens eine Einschränkungsabschnitt (46) einen ersten Einschränkungsabschnitt (46a) sowie einen zweiten Einschränkungsabschnitt (46b) enthält, wobei sich der erste Einschränkungsabschnitt (46a) von dem Unterseitenabschnitt nach oben erstreckt und der zweite Einschränkungsabschnitt (46b) in der Fahrzeug-Längsrichtung getrennt von dem ersten Einschränkungsabschnitt (46a) angeordnet ist.

13. Aufbewahrungsfach für das Spreizsitz-Fahrzeug (1) nach einem der Ansprüche 1 bis 9, wobei der Wellen-Abschnitt (36) unterhalb des Aufbewahrungsabschnitts (31) angeordnet ist.

14. Aufbewahrungsfach für das Spreizsitz-Fahrzeug (1) nach einem der Ansprüche 1 bis 9, wobei sich die Öffnung (41) in einer Fahrzeug-Breitenrichtung nach oben und nach außen öffnet.

## Revendications

1. Coffre de stockage (30) pour un véhicule à selle (1), le coffre de stockage (30) étant configuré pour stocker un terminal d'informations portable (T), le coffre de stockage (30) comprenant :
une partie de stockage (31) comprenant une ouverture (41) pour l'insertion et le retrait du terminal d'informations portable (T), une paroi latérale intérieure (43) et au moins une partie de restriction (46) opposée à la paroi latérale intérieure (43), la partie de stockage (31) étant configurée pour stocker le terminal d'informations portable (T) de sorte que le terminal d'informations portable (T) se trouve entre la paroi latérale intérieure (43) et l'au moins une partie de restriction (46) ;
une partie de couvercle (32) pouvant passer à un état fermé et à un état ouvert, la partie de couvercle (32) étant configurée pour fermer l'ouverture à l'état fermé, la partie de couvercle (32) étant configurée pour ouvrir l'ouverture à l'état ouvert, la partie de couvercle (32) étant opposée à la paroi latérale intérieure (43) à l'état fermé ;
au moins un élément élastique (35) disposé sur au moins soit la partie de couvercle (32) soit la paroi latérale intérieure (43), l'au moins un élément élastique (35) étant configuré pour presser le terminal d'informations portable (T) dans une direction d'épaisseur du terminal d'informations portable (T) entre la partie de couvercle (32) ou la paroi latérale intérieure (43) à l'état fermé pour maintenir le terminal d'informations portable (T) dans la partie de stockage (31) ; et
une partie d'arbre (36) configurée pour supporter en pivotement la partie de couvercle (32), dans lequel
la paroi latérale intérieure (43) s'étend approximativement dans la direction de haut en bas du véhicule ou s'étend pour se rapprocher progressivement de l'au moins une partie de restriction (46) de bas en haut.
la paroi latérale intérieure (43) et l'au moins une partie de restriction (46) créent un espace entre elles afin de permettre au terminal d'informations portable (T) de s'incliner vers l'au moins une partie de restriction (46) à l'état ouvert, et
l'au moins une partie de restriction (46) est séparée du terminal d'informations portable (T) à l'état fermé,
**caractérisé en ce que** l'au moins une partie de restriction (46) entre en contact avec le terminal d'informations portable (T) sur un côté de surface avant ou arrière du terminal d'informations portable (T) afin de limiter le mouvement du terminal d'informations portable (T) lorsque la partie de couvercle (32) passe de l'état fermé à l'état ouvert.

2. Coffre de stockage pour le véhicule à selle (1) selon la revendication 1, dans lequel l'au moins un élément élastique (35) est disposé au moins partiellement à la même hauteur que le centre de la paroi latérale intérieure (43) dans la direction de haut en bas du véhicule à l'état fermé.

3. Coffre de stockage pour le véhicule à selle (1) selon la revendication 2, dans lequel l'au moins un élément élastique (35) s'étend dans la direction longitudinale du terminal d'informations portable (T) lorsque le terminal d'informations portable (T) est stocké dans la partie de stockage (31) à l'état fermé.

4. Coffre de stockage pour le véhicule à selle (1) selon la revendication 1, dans lequel l'au moins un élément élastique (35) est disposé sur la partie de couvercle (32).

5. Coffre de stockage pour le véhicule à selle (1) selon la revendication 4, dans lequel l'au moins une partie de restriction (36) est disposée sous l'au moins un élément élastique (35) à l'état fermé.

6. Coffre de stockage pour le véhicule à selle (1) selon la revendication 5, dans lequel
la partie de stockage (31) comprend en outre une partie de surface inférieure (42) s'étendant dans une direction croisant la direction de haut en bas du véhicule,
l'au moins une partie de restriction (46) s'étend vers le haut depuis la partie de surface inférieure (42), et
l'au moins une partie de restriction (46) a une hauteur supérieure ou égale à la moitié de la dimension allant de la partie de surface inférieure (42) à l'au moins un élément élastique (35) à l'état fermé.

7. Coffre de stockage pour le véhicule à selle (1) selon la revendication 6, dans lequel l'au moins une partie de restriction (46) s'étend de la partie de surface inférieure (42) à un voisinage de l'au moins un élément élastique (35).

8. Coffre de stockage pour le véhicule à selle (1) selon la revendication 6, dans lequel l'au moins une partie de restriction (46) a une dimension supérieure ou égale au quart et inférieure ou égale aux trois quarts de la dimension de la paroi latérale intérieure (43) dans la direction de haut en bas du véhicule.

9. Coffre de stockage pour le véhicule à selle (1) selon la revendication 1, dans lequel l'au moins un élément élastique (35) comprend un premier élément élastique (35a) et un second élément élastique (35b), le premier élément élastique (35a) étant disposé sur la partie de couvercle (32), le second élément élastique (35b) étant disposé sur la paroi latérale intérieure (43) de la partie de stockage (31).

10. Coffre de stockage pour le véhicule à selle (1) selon l'une quelconque des revendications 1 à 9, dans lequel la partie de stockage (31) a une dimension dans la direction avant-arrière du véhicule supérieure aux dimensions de la partie de stockage (31) dans la direction de haut en bas du véhicule et dans une direction de largeur du véhicule.

11. Coffre de stockage pour le véhicule à selle (1) selon la revendication 10, dans lequel
l'au moins une partie de restriction (46) est opposée à la paroi latérale intérieure (43) dans la direction de largeur du véhicule, et
l'au moins une partie de restriction (46) a une dimension dans la direction avant-arrière du véhicule inférieure à la dimension de la partie de stockage (31) dans la direction avant-arrière du véhicule.

12. Coffre de stockage pour le véhicule à selle (1) selon la revendication 10, dans lequel
la partie de stockage (31) comprend en outre une partie de surface inférieure (42) s'étendant dans une direction croisant la direction de haut en bas du véhicule, et
l'au moins une partie de restriction (46) comprend une première partie de restriction (46a) et une seconde partie de restriction (46b), la première partie de restriction (46a) s'étendant vers le haut depuis la partie de surface inférieure, la seconde partie de restriction (46b) étant disposée à l'écart de la première partie de restriction (46a) dans la direction avant-arrière du véhicule.

13. Coffre de stockage pour le véhicule à selle (1) selon l'une quelconque des revendications 1 à 9, dans lequel la partie d'arbre (36) est disposée sous la partie de stockage (31).

14. Coffre de stockage pour le véhicule à selle (1) selon l'une quelconque des revendications 1 à 9, dans lequel l'ouverture (41) s'ouvre vers le haut et vers l'extérieur dans la direction de largeur du véhicule.
